# EUROPEAN PATENT SPECIFICATION

(11) **EP 0 798 205 B1**
(45) Date of publication and mention of the grant of the patent: **26.11.2003**
(21) Application number: 97110154.8
(22) Date of filing: 30.09.1993
(51) Int. Cl.: B62M 23/02

(54) **Method for powering a muscle-operated vehicle and vehicle**
Verfahren zum Betrieb eines muskelkraft-betriebenen Fahrzeuges und Fahrzeug
Méthode de propulsion d'un véhicule par la force musculaire et véhicule

(30) Priority: 30.09.1992 JP 28543292
(43) Date of publication of application: 01.10.1997
(62) Divisional of application: 93115844.8
(73) Proprietor: YAMAHA HATSUDOKI KABUSHIKI KAISHA, Iwata-shi Shizuoka-ken, 438 (JP)
(72) Inventor: Nozomu, Takata, Iwata-shi, Shizuoka-ken, 438 (JP)
(74) Representative: Grünecker, Kinkeldey, Stockmair & Schwanhäusser Anwaltssozietät

(56) References cited:
- EP-A- 0 222 179
- EP-A- 0 559 231
- PATENT ABSTRACTS OF JAPAN vol. 14, no. 113 (M-0944), 2 March 1990 & JP 01 314685 A (JAPAN II M KK), 19 December 1989,

## Description

The present invention relates to a method for powering a muscle-operated vehicle, especially bicycle, having a muscle-operated driving system, an auxiliary electrical power driving system and a control means for controlling the output of said electrical power driving system in response to the variations of a pedal depressing force of the muscle-operated driving system, wherein a pedal force of the muscle-operated driving system is detected to derive an electric motor drive force of the electrical power driving system and to a vehicle, especially bicycle, having a muscle-operated driving system.

A device for detecting pedal forces and controlling the drive forces of an electric motor of the auxiliary electrical power driving system in response to the magnitude of the pedal force is disclosed in a Japanese Unexamined Utility Model Publication No. Sho56-76590 and a Japanese Unexamined Patent Publication No. Hei2-74491. In both cases said device provides for increasing the drive force of the electric motor to alleviate the pedal effort when a larger drive force is needed.

Similar solutions are known from the Applicant's European Patent Applications 93107685.5 and 93103706.3 which are comprised in the art under Article 54(3) EPC.

As is apparent from the prior art, as the pedal force is input from the crank pedal, the pedal force varies with a period of a half turn of the crankshaft, rendering the pedal force to be almost zero when the crank pedal comes to the top or bottom dead centres.

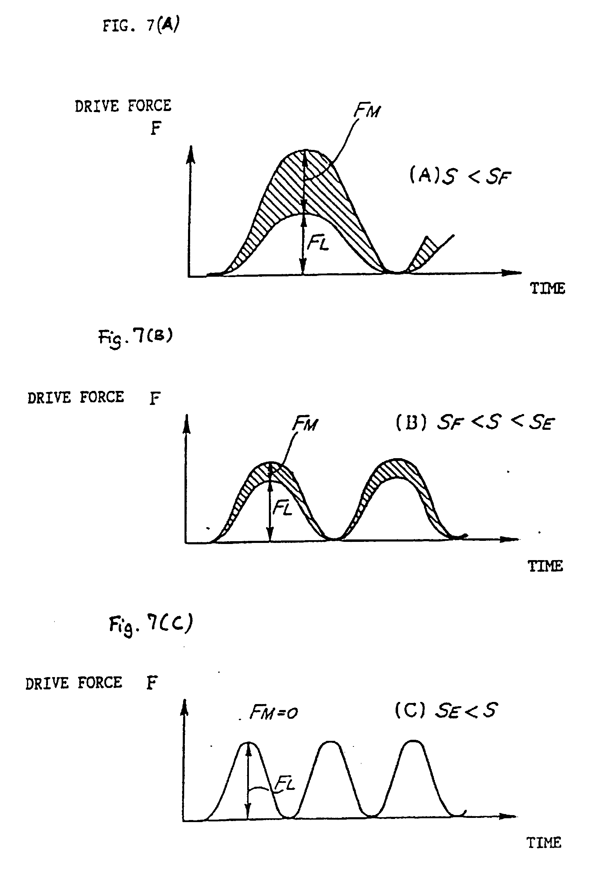

Figure 7 shows the change of the human drive force or pedal force F_{L} against time t. The changing period of the pedal force corresponds to a half turn of the crank pedal. While the devices of the prior art detect the periodically changing pedal force F_{L}, the relationship between the pedal force F_{L} and the electric motor drive force F_{M} of the auxiliary electrical power driving system is defined in a simple manner, namely, the ratio F_{M}/F_{L} which is designated as assist rate η in this application, is determined to be constant.

Thus, as the assist rate η is constant as described above, the motor drive force F_{M} = η x F_{L} according to the simple definition is output. Accordingly, in order to produce a larger assisting motor drive force F_{M} with a small pedal effort at a low speed, the assist rate η has to set to a large value. If, on the other hand, the assist rate η is set large, however, the electric motor produces an excessively large drive force also during running of the vehicle, specifically bicycle, at a high speed. This results in an excessively high vehicle speed and unnecessary energy consumption of a battery provided in the auxiliary electrical power driving system.

Accordingly, it is an objective of the present invention to provide a method and a vehicle of the type as indicated above which provides appropriate power assistance suitable for the vehicle, specifically bicycle, under all operating conditions restricting energy consumption from a battery of the auxiliary electrical power driving system to prevent the battery from being wasted and avoids the need of a mechanical, optical or electrical vehicle speed sensor.

According to the present invention, the afore-indicated objective is performed in terms of a method for powering a muscle-operated vehicle, specifically bicycle, according to claim 1.

Preferably, in the high speed range of vehicle operation, the afore-indicated ratio is gradually decreased.

Moreover, the afore-indicated objective is performed in terms of a muscle-operated vehicle, specifically bicycle, according to claim 6.

Prefered embodiments are of the present invention are laid down in the further subclaims.

The present invention is specifically advantageous in that the ratio between the drive force F_{M} of the electric motor and the pedal force F_{L} namely the assist rate η (= F_{M}/F_{L}) is made variable, preferably is variable to gradually decrease with an increase of the motor revolution, at least in the high speed'range of vehicle operation, said assist rate η can be made sufficiently small at least in said high speed operating range to restrict the consumption of the battery while rendering it possible to ride at suitable vehicle speeds, specifically bicycle speeds.

In the following the present invention is explained in greater detail by means of several embodiments thereof in conjuncation with the accompanying drawings wherein:
Figure 1 is a side view of a powered bicycle according to an embodiment of the present invention,
Figure 2 is a block diagram of the drive train for powering the bicycle of Figure 1,
Figure 3 is a partial bottom view of the drive system and drive train for powering the bicycle of Figure 1,
Figure 4 is a schematic side view of a pedal depressing force detecting unit of the drive system of Figure 3,
Figure 5 is a cross section along the line V-V in Figure 4,
Figure 6 (A) and (B) are diagrams of different characteristics of the assist rate η,
Figure 7(A) - (C) are diagrams showing the periodically changes of the pedal depressing force and the electric motor driving force according to a further embodiment of the present invention.

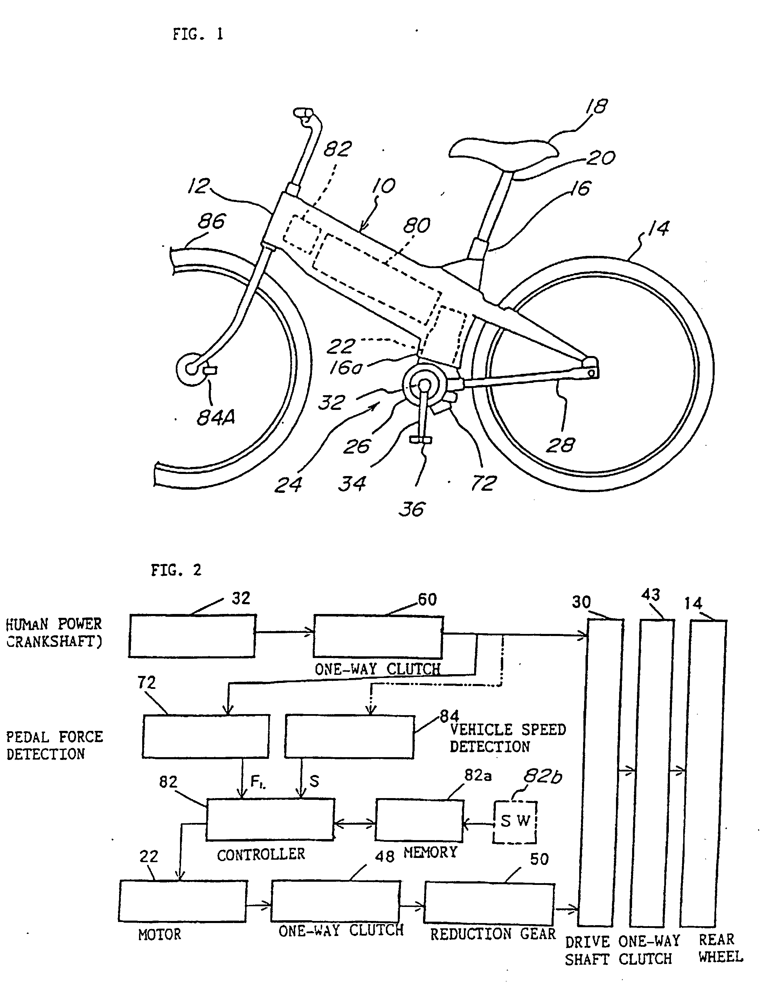

Figure 1 shows a bicycle as one embodiment of the vehicle of the present invention which comprises an auxiliary electrical power driving system. In Figure 1 it is indicated that a main frame 10 of the bicycle extends from a head pipe 12 obliquely back downward to a shaft of a rear wheel 14. A seat tube 16 is secured generally perpendicularly to the main frame 10. A seat post 20 is secured to the top end of'the seat tube 16 to support a saddle 18.

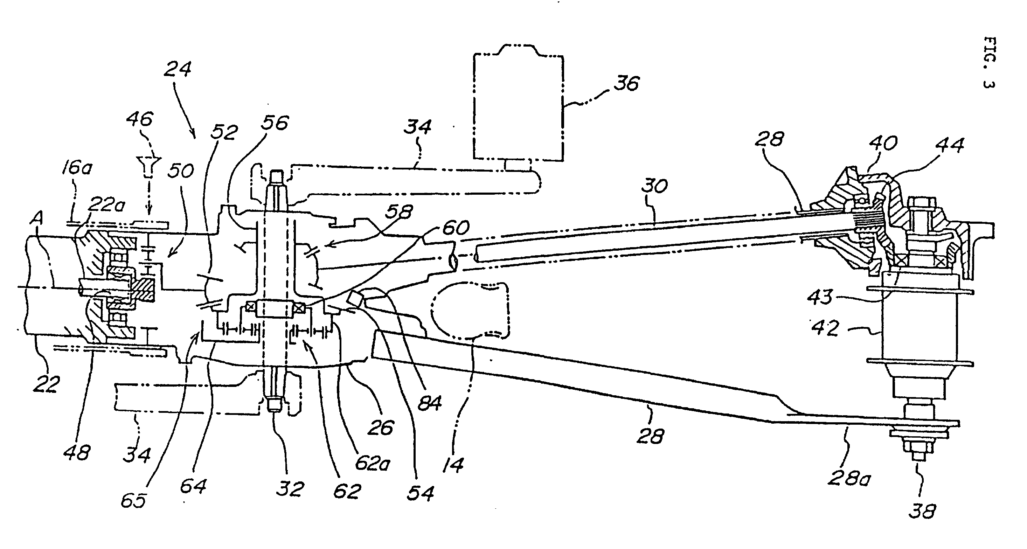

A cylindrical portion 16a which is open downward is formed at the bottom of the seat tube 16 to accommodate a DC electric motor 22. A power unit 24 is secured to the bottom end of the seat tube 16. The power unit 24 is provided with a bottom bracket case 26 and a rear stay 28 extending backward from the bottom bracket case 26. The rear wheel 14 is mounted on the rear end of the rear stay 28. A drive shaft 30 passes through the right hand rear stay 28 (Refer to Fig. 3).

Now the power unit 24 will be explained. Figs. 1 and 3 show a crankshaft 32 passing through the bottom bracket case 26, and a crank 34 secured to both ends of the crankshaft 32. A pedal 36 is attached to the crank 34.

The left end of the wheel shaft 38 for the rear wheel 14 is secured to an end plate 28a secured to the left hand rear stay 28. The right end of the wheel shaft 38 is secured to a bevel gear case 40 secured to the right hand rear stay 28. A hub 42 is rotatably supported with the wheel shaft 38. The rotation of the drive shaft 30 is transmitted through a bevel gear mechanism 44 to the hub 42.

The electric motor 22 is fit from above into and secured to the bottom bracket case 26 as shown in Fig. 3. The motor shaft 22a of the electric motor 22 is perpendicular to the crankshaft 32 and located near the center of the width of the vehicle. The bottom bracket case 26 is fit into and connected to the cylindrical portion 16a of the seat tube 16, while the electric motor 22 is inserted from under into the cylindrical portion 16a.

The rotation of the electric motor 22 is transmitted, as shown in Fig. 3, through a one-way clutch 48, a planetary gear speed reduction mechanism 50, a small bevel gear 52, and a large bevel gear 54 to a cylindrical resultant force shaft 56 supported for free rotation with the crankshaft 32. The rotation of the resultant force shaft 56, in turn, is transmitted through a bevel gear mechanism 58 to the drive shaft 30.

The rotation transmitted from the rear wheel 14 toward the electric motor 22 is shut off with a one-way clutch 43. The planetary gear speed reduction mechanism 50 is of a know type, located between a sun gear driven by the electric motor 22 and a ring gear fixed to the bottom bracket case 26, and transmits the revolution of a planetary gear engaging with those gears to a small bevel gear 52.

The rotation input by human power from the pedal 36 on the other hand is transmitted through the crankshaft 32, a one-way clutch 60, and a planetary gear mechanism 62 to the large bevel gear 54. Thus, the rotation input from the crankshaft 32 is transmitted from the large bevel gear 54 through the resultant force shaft 56, and the bevel gear mechanism 58 to the drive shaft 30. The rotation of the crankshaft 32 is not transmitted while the electric motor 22 is at rest because of the function of the one-way clutch 48. Also, when the crankshaft 32 is at rest or rotating in the reverse direction, the rotation of the electric motor 22 is not transmitted to the crankshaft 32 because of the function of the one-way clutch 60. Here, the drive shaft 30 is located on the right side of the plane A (Refer to Fig. 3) including the motor shaft 22a in the longitudinal direction of the vehicle.

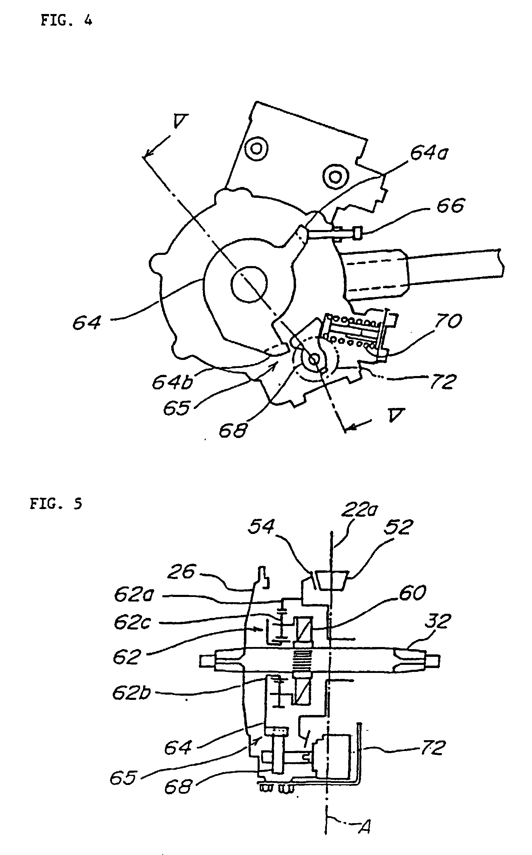

A planetary gear speed increasing mechanism 62 as shown in Figs. 3 and 5 comprises a ring gear 62a secured to the large bevel gear 54, a sun gear 62a secured to a pedal force detecting lever 64, and a planetary gear 62c interposed between those gears. The crankshaft 32 causes the planetary gear 62c to revolve through the one-way clutch 60.

The pedal force detection lever 64 is a component of a pedal force detecting means 65 for detecting the drive force by human power through the pedal 36 by means of reactional forces applied to the sun gear 62b. The pedal force detecting means 65 is located to the left side of the plane A mentioned above.

Namely, the lever 64 of the pedal force detecting means 65, as shown in Figs. 4 and 5, is provided with two projections 64a and 64b. The projection 64a comes into contact with a stopper 66 to check the rotation in the clockwise direction as seen in Fig. 4 or the rotation in the direction opposite that in which the pedal force of the pedal 36 is applied. The projection 64b comes into contact with a second lever 68 so that the second lever 68 is rotated clockwise by the counterclockwise rotation of the lever 64.

The second lever 68 is urged to return by a return spring 70 so that the lever 64 is urged to return clockwise as seen in Fig. 4. The amount of the rotation of the second lever 68 is transmitted to a potentiometer 72 serving as a pedal force sensor. Thus, the lever 64 rotates clockwise as seen in Fig. 4 in proportion to the pedal force of the pedal 36, the second lever 68 is rotated clockwise, and the pedal force is known from the amount of rotation of the potentiometer 72.

Fig. 1 shows a rechargeable battery 80 such as a lead-acid battery, and a controller 82, both accommodated between the seat tube 16 and the head pipe 12 of the main frame 10. Fig. 1 also shows a vehicle speed detecting means 84 arranged to face the large bevel gear. The vehicle speed detecting means 84 may be of a known type which detects the rotation of the large bevel gear 56 either electromagnetically or optically.

The pedal force F_{L} detected by the potentiometer 72 and the vehicle speed S detected by the vehicle speed detecting means 84 are input to the controller 82 which in turn controls electric motor current based on the pedal force F_{L} and vehicle speed S, to produce an electric motor torque T_{M}.

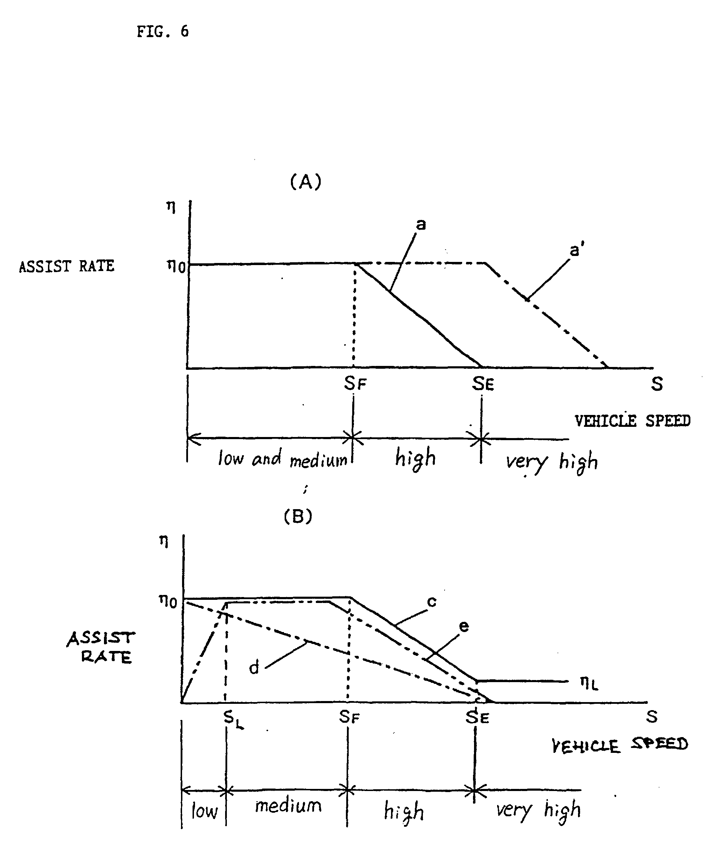

A memory 82 stores the assist rate η which varies with the vehicle speed. The assist rate η is defined as the ratio of the electric motor drive force F_{M} to the pedal force F_{L} (F_{M}/F_{L}) and set for example to the characteristic as shown in Figs. 6(A) and 6(B). According to the characteristic (a) of the solid line in Fig. 6(A), the assist rate η is constant ηₒ when the vehicle speed S is not greater than S_{F}, gradually decreases linearly for the vehicle speed range S_{F}<S<S_{E} as determined by the equation η=ηₒ×(S_{E}-S)/(S_{E}-S_{F}).., (1), and zero for the vehicle speed range S_{E}<S.

The controller 82 first determines the assist rate η for the vehicle speed S using the characteristics stored in the memory 82a. The drive force F_{M} which the electric motor should produce at this time is determined from the equation [F_{M} = ηF_{L}].

Fig. 7 as a whole shows changes in the resultant drive force F = F_{L} + F_{M} at this time. Fig. 7(A) represents low and medium speeds not higher than S_{F}. Fig. 7(B) the high speed range S_{F}<S<S_{E}, and Fig. 7(C) the very high speed range S_{E}<S. As apparent from those figures, since the assist rate η = ηₒ (constant) in the low and medium speed range of S<SF, the drive force F_{M} by the electric motor 22 is determined by F_{M} = ηₒF_{L}. The resultant drive force F also changes in response to the periodical changes in the pedal force F_{L}.

In the high (B) speed range of S_{F}<S<S_{E}, η is determined by the equation (1) described above and is smaller than ηₒ. In the very high (C) speed range of S_{E}<S, η is zero so that the resultant drive force is only the pedal force F_{L}.

While the assist rate η of the characteristic (a) of Fig. 6(A) is used in the embodiment described above, the characteristic to be used may be changed in many ways. For example, the characteristic may be (a'), as shown in Fig. 6(A), defined by translating the characteristic (a) to the higher speed side. In this case, the bicycle becomes suitable for running at higher speeds because the vehicle speed range for the assist rate ηₒ is expanded to the high speed side.

In the diagrams of figures 6(A) and (B) the symbols used have the following meaning or indicate the following speed ranges, generally vehicle speed S in the range from zero to S_{F} refers to a low and medium speed range of vehicle operation which, in turn, in figure 6(B) is subdivided in a low speed operating range covering speeds from zero to S_{L}. Moreover, vehicle speeds in the range from S_{F} to S_{E} belong to the high speed range of vehicle operation whereas as vehicle speeds exceeding the speed S_{E} belong to the very high speed operating range.

Accordingly, the further samples of the assist rate η shown in figure 6(B) represent the following conditions: characteristic (c) represents an assist rate η which is not zero in the very high speed operating range of the bicycle but which is kept at a constant value η_{L} for the very high speed range (S_{E}<S). The characteristic (d) represents the assist rate η decreasing gradually in low and medium speed range (S<S_{F}) and in the high speed operating range (S_{F}<S<S_{E}) while in the very high speed operating range (S_{E}<S) *η* = 0, ie., no power assistance is provided. The characteristic (e) represents the assist rate η which gradually increases in the low speed operating range of vehicle speed (S<S_{L}) while in the medium speed range (S_{L}<S<S_{F}) the assist rate is kept constant at η0. Then in the high speed operating range (S_{F}<S<S_{E}) the assist rate η gradually decreases to practically zero in the very high speed operating range (S_{E}<S).

According to the characteristic (e), a riding impression like that of an ordinary bicycle without an electric motor can be provided by making the assist rate small at the time of starting.

It is also possible that a plural number of characteristics of the assist rate η are stored in the memory 82a so that any one of them can be selected through a selection switch 82b (Fig. 2). The characteristic may also be translated with respect to the vehicle speed S as shown in Fig. 6(A) by means of the switch 82b so that the characteristic may be changed to any required one either continuously or discontinuously.

While the vehicle speed detecting means 84 is arranged to face the large bevel gear 54 in the embodiment described above, the means 84 may also be arranged at the front wheel 86 as shown with the reference number 84A in Fig. 1. However, energy consumption can be further saved when the means 84 is arranged between the crankshaft 32 and the one-way clutch 43 as in the embodiment described above at the time of downhill ride because the speed S is made zero by stopping the crankshaft 32.

In addition, said means 84 may detect the motor revolution speed as a representative of the vehicle speed. Therefore, a direct measurement or detection of the vehicle speed is dispensable.

While the rear wheel 14 is driven by a transmission arrangement comprising a shaft drive mechanism using the drive shaft 30 in the embodiment described above, this invention may also be embodied so that the rear wheel 14 is driven by a transmission arrangement comprising a chain drive mechanism with a sprocket fixed to the resultant force shaft 56.

Since the drive force (F_{M}) of the electric motor (22) to the pedal force (F_{L}) namely the assist rate η (= F_{M}/F_{L}) is made to gradually decrease with the increase in the vehicle speed S at least in the high speed range, the assist rate η can be made sufficiently small at least in the high speed range to restrict the consumption of the battery while making it possible to ride at speeds suitable for the bicycle.

## Claims

1. Method for powering a muscle-operated vehicle, especially bicycle, having a muscle-operated driving system, an auxiliary electrical power driving system and a control means for controlling the output of said electrical power driving system in response to the variations of a pedal depressing force of the muscle-operated driving system, wherein a pedal force (F_{L}) of the muscle-operated driving system is detected to derive an electric motor drive force (F_{M}) of the electrical power driving system, and in addition to said pedal force a speed of said auxiliary electrical power driving system at a motor drive force supplying condition is detected to derive the electric motor drive force, arid that a ratio (η) between the electric motor drive force (F_{M}) and the pedal force (F_{L}) is variable in response to said speed of the auxiliary electrical power driving system corresponding to the vehicle speed (S).

2. Method as claimed in claim 1, **characterised in that** the ratio between the electric motor drive force (F_{M}) and the pedal force (F_{L}) is gradually decreased at least in a high speed operating range of the vehicle.

3. Method as claimed in claim 1 or 2, **characterised in that** the ratio (η) between the electric motor drive force (F_{M}) and the pedal force (F_{L}) is kept constant in a low speed operating range and that the ratio gradually decreases linearly in a medium speed operating range to zero in a high speed operating range of the vehicle.

4. Method as claimed in claim 1 or 2, **characterised in that** the ratio (η) between the electric motor drive force (F_{M}) and the pedal force (F_{L}) is kept constant in the low and medium speed operating ranges while the ratio (η) gradually decreases linearly to a certain position value (η_{L}) or to zero in the high speed operating range of the vehicle.

5. Method as claimed in claim 1 or 2, **characterised in that** the ratio (η) between the electric motor drive force (F_{M}) and the pedal force (F_{L}) decreases gradually over the low and medium vehicle speed operating ranges to be kept generally zero in the high speed operating range of the vehicle.

6. A vehicle, especially bicycle, having a muscle-operated driving system, an auxiliary electrical power driving system and a control means for controlling the output of said electrical power driving system in response to the variations of a pedal depressing force of the muscle-operated driving system, and means for detecting a pedal force (F_{L}) of the muscle-operated driving system to derive an electric motor drive force (F_{M}) of the electrical power driving system; and means for detecting a speed of said auxiliary electrical power driving system at a motor drive force supplying condition, and said control means (82) comprises a memory (82a) wherein a ratio between the drive force (F_{M}) of the auxiliary electrical power driving system and the pedal force (F_{L}) is stored in said memory (82a) as an assist rate (η) which is in response to said speed of the auxiliary electrical power driving system corresponding to the vehicle speed (S).

7. A vehicle as claimed in claim 6, **characterised in that** a crankshaft (32) of the manpower drive system, via a one-way clutch (60), is coupled to a drive shaft (30) which, in turn, drives a rear wheel (14) of the bicycle via another one-way clutch (43).

8. A vehicle as claimed in claim 7, **characterised in that** the pedal depressing force detecting means (65) receives a signal through the one-way clutch (60) downstream of the crankshaft (32) and said pedal depressing force detecting means (65) and the motor revolution speed detecting means feed the controller (82) which directly controls the electric motor (22), said electric motor (22) driving said drive shaft (30) via another one-way clutch (48) and a speed reduction gear mechanism (50).

9. A vehicle as claimed in claim 7 or 8, **characterised in that** the rotation of the drive shaft (30) is transmitted via a bevel gear mechanism (44) and the one-way clutch (43) to a hub (42) of the rear wheel (14).

10. A vehicle as claimed in at least one of the preceding claims 7 to 9, **characterised in that** a torque of the motor shaft (22a) of the electric motor (22) is transmitted via the one-way clutch (48), the planetary reduction gear mechanism (50), a small bevel gear (52) and a large bevel gear (54) to a cylindrical, resultant force shaft (56) supported for free rotation on the crankshaft (32), wherein the rotation of the resultant force shaft (56) is transmitted through a bevel gear mechanism (58) to the drive shaft (30).

## Patentansprüche

1. Verfahren zum Antreiben eines muskelbetätigten Fahrzeugs, insbesondere eines Fahrrades, das ein muskelbetätigtes Antriebssystem, ein elektrisches Hilfskraftantriebssystem und eine Steuereinrichtung zum Steuern des Ausgangs des elektrischen Kraftantriebsystems im Ansprechen auf die Änderungen einer Pedalniederdrückkraft des muskelbetätigten Antriebssystems aufweist, wobei eine Pedalkraft (F_{L}) des muskelbetätigten Antriebssystems nachgewiesen wird, um eine Elektromotor-Antriebskraft (F_{M}) des elektrischen Kraftantriebsystems abzuleiten, wobei zusätzlich zu der Pedalkraft eine Geschwindigkeit des Hilfskraftantriebsystems in einem Motorantriebskraft-Zuführzustand nachgewiesen wird, um die Elektromotor-Antriebskraft abzuleiten, und wobei ein Verhältnis (η) zwischen der Elektromotor-Antriebskraft (F_{M}) und der Pedalkraft (F_{L}) im Ansprechen auf die Geschwindigkeit des elektrischen Hilfskraftantriebssystems entsprechend der Fahrzeuggeschwindigkeit (S) variabel ist.

2. Verfahren nach Anspruch 1, **dadurch gekennzeichnet, dass** das Verhältnis zwischen der Elektromotor-Antriebskraft (F_{M}) und der Pedalkraft (F_{L}) zumindest in einem Betriebsbereich hoher Geschwindigkeit des Fahrzeugs allmählich verringert wird.

3. Verfahren nach Anspruch 1 oder 2, **dadurch gekennzeichnet, dass** das Verhältnis (η) zwischen der Elektromotor-Antriebskraft (F_{M}) und der Pedalkraft (F_{L}) in einem Betriebsbereich niedriger Geschwindigkeiten konstant gehalten wird und daß das Verhältnis sich linear in einem Betriebsbereich mittlerer Geschwindigkeiten bis auf Null in einem Betriebsbereich hoher Geschwindigkeiten des Fahrzeugs allmählich verringert.

4. Verfahren nach Anspruch 1 oder 2, **dadurch gekennzeichnet, dass** das Verhältnis (η) zwischen der Elektromotor-Antriebskraft (F_{M}) und der Pedalkraft (F_{L}) in den Betriebsbereichen niedriger und mittlerer Geschwindigkeiten konstant gehalten wird, währenddessen sich das Verhältnis (η) linear auf einen bestimmten Positionswert (η_{L}) oder auf Null in dem Betriebsbereich hoher Geschwindigkeiten des Fahrzeugs allmählich vermindert.

5. Verfahren nach Anspruch 1 oder 2, **dadurch gekennzeichnet, dass** das Verhältnis (η) zwischen der Elektromotor-Antriebskraft (F_{M}) und der Pedalkraft (F_{L}) sich über die Betriebsbereiche niedriger und mittlerer Fahrzeuggeschwindigkeiten allmählich vermindert, um im allgemeinen auf Null in dem Betriebsbereich hoher Geschwindigkeiten des Fahrzeugs gehalten zu werden.

6. Fahrzeug, insbesondere Fahrrad, das ein muskelbetätigtes Antriebssystem, ein elektrisches Hilfskraftantriebssystem und eine Steuereinrichtung zum Steuern des Ausgangs des elektrischen Kraftantriebssystems im Ansprechen auf die Änderungen einer Pedalniederdrückkraft des muskelbetätigten Antriebssystems aufweist und eine Einrichtung zum Nachweisen einer Pedalkraft (F_{L}) des muskelbetätigten Antriebssystems aufweist, um eine Elektromotor-Antriebskraft (F_{M}) des elektrischen Kraftantriebssystems abzuleiten und eine Einrichtung zum Nachweisen einer Geschwindigkeit des elektrischen Hilfskraftantriebssystems in einem Motorantriebskraft-Zuführzustand aufweist, wobei die Steuereinrichtung (82) einen Speicher (82a) umfasst, und wobei ein Verhältnis zwischen der Antriebskraft (F_{M}) des elektrischen Hilfskraftantriebssystems und der Pedalkraft (F_{L}) in dem Speicher (82a) als ein Unterstützungsverhältnis (η) gespeichert wird, welches auf die Geschwindigkeit des elektrischen Hilfskraftantriebssystems entsprechend der Fahrzeuggeschwindigkeit (S) anspricht.

7. Fahrzeug nach Anspruch 6, **dadurch gekennzeichnet, dass** eine Kurbelwelle (32) eines Antriebssystems menschlicher Leistung über eine Freilaufkupplung (60) mit einer Antriebswelle (30) gekoppelt ist, welche wiederum ein Hinterrad (14) des Fahrrads über eine andere Freilaufkupplung (43) antreibt.

8. Fahrzeug nach Anspruch 7, **dadurch gekennzeichnet, dass** die Pedalniederdrückkraft-Nachweiseinrichtung (65) ein Signal durch die Freilaufkupplung (60) stromabwärts der Kurbelwelle (32) und der Pedalniederdrückkraft-Nachweiseinrichtung (65) und der Motordrehzahl-Nachweiseinrichtung empfängt, welches dem Steuergerät (82) zugeführt wird, welches direkt den Elektromotor (22) steuert, wobei der Elektromotor (22) die Antriebswelle (30) über eine andere Freilaufkupplung (48) und ein Übersetzungsgetriebemechanismus (50) ins Langsame antreibt.

9. Fahrzeug nach Anspruch 7 und 8, **dadurch gekennzeichnet, dass** die Drehung der Antriebswelle (30) über einen Kegelradmechanismus (44) und die Freilaufkupplung (43) auf eine Radnabe (42) des Hinterrades (14) übertragen wird.

10. Fahrzeug nach einem der vorhergehenden Ansprüche 7 bis 9, **dadurch gekennzeichnet, dass** ein Drehmoment der Motorwelle (22a) des Elektromotors (22) über die Freilaufkupplung (48), den Planetengetriebemechanismus (50) ins Langsame, ein kleines Kegelrad (52) und ein großes Kegelrad (54) auf eine zylindrische Welle (56) der Kraftresultierenden übertragen wird, die für eine freie Drehung auf der Kurbelwelle (32) gelagert ist, wobei die Drehung der Welle (56) der Kraftresultierenden über einen Kegelradmechanismus (58) auf die Antriebswelle (30) übertragen wird.

## Revendications

1. Méthode de propulsion d'un véhicule par la force musculaire, spécialement un vélo, ayant un système de propulsion par la force musculaire, un système de propulsion auxiliaire à puissance électrique et des moyens de commande pour commander la fourniture de puissance mécanique par ledit système de propulsion à puissance électrique, en réponse aux variations de la force d'actionnement d'une pédale du système de propulsion par la force musculaire, dans lequel une force de pédalage (F_{L}) du système de propulsion par la force musculaire est détectée pour en dériver une force de propulsion par moteur électrique (F_{M}) du système de propulsion par puissance électrique, et, en plus de ladite force de pédalage, une vitesse dudit système de propulsion auxiliaire à puissance électrique pour des conditions de fourniture de force d'entraînement par moteur est détectée pour dériver la force d'entraînement par moteur électrique, et un rapport (η), entre la force de propulsion par moteur électrique (F_{M}) et la force de pédalage (F_{L}), est variable, en réponse à ladite vitesse du système de propulsion auxiliaire à puissance électrique correspondant à la vitesse de véhicule (S).

2. Méthode selon la revendication 1, **caractérisée en ce que** le rapport, entre la force de propulsion par moteur électrique (F_{M}) et la force de pédalage (F_{L}), est diminué graduellement; au moins dans la plage de fonctionnement à haute vitesse du véhicule.

3. Méthode selon la revendication 1 ou 2, **caractérisée en ce que** le rapport (η), entre la force de propulsion par moteur électrique (F_{M}) et la force de pédalage (F_{L}), est maintenu constant dans la plage de fonctionnement à basse vitesse, tandis que le rapport diminue graduellement de façon linéaire dans une plage de fonctionnement à moyenne vitesse, jusqu'à zéro, dans la plage de fonctionnement à haute vitesse du véhicule.

4. Méthode selon la revendication 1 ou 2, **caractérisée en ce que** le rapport (η), entre la force de propulsion par moteur électrique (F_{M}) et la force de pédalage (F_{L}), est maintenu constant sur les plages de fonctionnement à basse et moyenne et haute vitesse, tandis que le rapport (η) diminue graduellement de façon linéaire, jusqu'à une certaine valeur de position ( η_{L}) ou jusqu'à zéro, dans la plage de fonctionnement à haute vitesse du véhicule.

5. Méthode selon la revendication 1 ou 2, **caractérisée en ce que** le rapport (η) entre la force de propulsion par moteur électrique (F_{M}) et la force de pédalage (F_{L}) diminue graduellement dans les plages de fonctionnement des basses et moyennes vitesses du véhicule, pour être globalement de valeur zéro dans la plage de fonctionnement de haute vitesse du véhicule.

6. Un véhicule, spécialement un vélo, muni d'un système de propulsion par la force musculaire, d'un système de propulsion auxiliaire par puissance électrique, et de moyens de commande pour commander la valeur de la puissance mécanique fournie par le système de propulsion par puissance électrique, en réponse à des variations de la force d'actionnement de pédales de système de propulsion par la force musculaire, et de moyens de détection de force d'actionnement de pédales(F_{L}) du système de propulsion par la force musculaire, pour en dériver une force de propulsion par moteur électrique (F_{M}) du système de propulsion par puissance électrique, et de moyens de détection d'une vitesse du système de propulsion par puissance électrique, dans des conditions de fourniture de force de propulsion par le moteur, et ledits moyens de commande (82) comprennent une mémoire (82a) dans laquelle le rapp ort entre la force de propulsion (F_{M}) du système de propulsion auxiliaire par puissance électrique et la force de pédalage (F_{L}) est stocké dans ladite mémoire (82a), à titre de taux d'assistance (η), qui se produit en réponse à ladite vitesse du système de propulsion auxiliaire à puissance électrique correspondant à la vitesse de véhicule (S).

7. Véhicule selon la revendication 6, **caractérisé en ce qu'**un pédalier (32) du système de propulsion par la puissance humaine, via un embrayage unidirectionnel ou roue libre (60), est couplé à un arbre d'entraînement (30), qui à son tour entraîne une roue arrière (14) du vélo, via un autre embrayage unidirectionnel (43).

8. Véhicule selon la revendication 7, **caractérisé en ce que** les moyens de détection de force d'actionnement de pédale (65) reçoivent un signal par l'intermédiaire de l'embrayage unidirectionnel (60); en aval du pédalier (32), et lesdits moyens de détection de forces d'actionnement de pédales (65) et les moyens de détection de vitesse de moteur alimentent le contrôleur (82) qui commande directement le moteur électrique (22), ledit moteur électrique (22) entraînant l'arbre d'entraînement (30) via un autre embrayage unidirectionnel (48) et un mécanisme à un engrenage de réduction de vitesse (50).

9. Véhicule selon la revendication 7 ou 8, **caractérisé en ce que** la rotation de l'arbre d'entraînement (30) est transmise, via un mécanisme à roue dentée conique (44) et l'embrayage unidirectionnel (43) à un moyeu (42), de la roue arrière (14).

10. Véhicule selon au moins l'une des revendication 7 à 9 précédentes, **caractérisé en ce que** le couple de l'arbre de moteur (22a) du moteur électrique (22) est transmis via l'embrayage unidirectionnel (48), le mécanisme à engrenage s de réduction de vitesse (50) planétaire, une petite roue dentée conique (52) et une grande roue dentée conique (54) à un arbre de force résultante (56). cylindrique supporté de façon à permettre une rotation libre sur le pédalier (32), dans lequel la rotation de l'arbre de force résultante (56) est transmise par un mécanisme à roue dentée conique (58) à l'arbre d'entraînement (30).
